# EUROPEAN PATENT APPLICATION

(11) **EP 3 643 430 A1**
(43) Date of publication of application: **29.04.2020**
(21) Application number: 17918763.8
(22) Date of filing: 26.07.2017
(51) Int. Cl.: B22F 3/105, B33Y 10/00, B33Y 40/00, B33Y 80/00

(54) **METHOD FOR MANUFACTURING METAL MEMBER**

(71) Applicant: Yamaha Hatsudoki Kabushiki Kaisha, Iwata-shi, Shizuoka 438-8501 (JP)
(72) Inventor: FUJITA, Hideo, Iwata-shi Shizuoka 438-8501 (JP)
(74) Representative: Zimmermann, Tankred Klaus
(86) International application number: PCT/JP2017/027048
(87) International publication number: WO 2019/021390

(57) **Abstract**

A manufacturing method of a metal member 13 includes a manufacturing step of manufacturing a three-dimensional manufactured metal object 11 through additive manufacturing by layering and bonding a plurality of layers in a layering direction DL. The three-dimensional manufactured object 11 includes the metal member 13 including an overhang portion 14, and a plurality of supports 12 that support the overhang portion 14 and are integral with the metal member 13. The support 12 is in contact with the metal member 13 only at tip portions of the support 12 in the layering direction DL. The cross-sectional area of the tip portion of the support 12 is smaller than the cross-sectional area of the other portions of the support 12.

## Description

### Technical Field

The present invention relates to a manufacturing method of a metal member to manufacture the metal member through additive manufacturing which is also called 3D printing.

### Background Art

In 3D printing, a three-dimensional manufactured object is made by layering and bonding a plurality of layers in a layering direction. In many methods of 3D printing, when the product to be finally obtained includes an overhang portion, that is, a portion located in the air, a support, which is also called a support member, to support the overhang portion is made together with the product. After the three-dimensional manufactured object including the product portion and the support portion is made, the support is removed from the three-dimensional manufactured object. For example, Patent Literature 1 discloses an apparatus to remove a support member from an object using a water jet.

### Citation List

### Patent Literature

Patent Literature 1: JP 2011-5666 A

### SUMMARY OF INVENTION

### Technical Problem

In a case in which a three-dimensional manufactured object is made of resin, there is a known method to make a support from resin material different from that of the overhang portion and remove the support by dissolving the support in liquid after the three-dimensional manufactured object is made. In a case in which a three-dimensional manufactured object is made of metal, such a method cannot be adopted and the support needs to be removed physically. However, when the three-dimensional manufactured object includes many supports, all the supports cannot be removed in a short time. In particular, when the three-dimensional manufactured object is made of metal, the support is higher in strength compared with the case in which the three-dimensional manufactured object is made of resin and thus the support cannot be removed easily. Furthermore, when the support is in a hollow portion, the support is hidden by the hollow portion and thus it is more difficult to remove the support.

Therefore, an object of the present invention is to provide a manufacturing method of a metal member that is able to reduce the burden required to remove a support.

### Solution to Problem

A preferred embodiment of the present invention provides a manufacturing method of a metal member including a manufacturing step of manufacturing a three-dimensional manufactured metal object through additive manufacturing by layering and bonding a plurality of layers in a layering direction, wherein the three-dimensional manufactured object includes the metal member including an overhang portion, and a plurality of supports that support the overhang portion and are integral with the metal member, the support is in contact with the metal member only at a tip portion of the support in the layering direction, and a cross-sectional area of the tip portion of the support is smaller than a cross-sectional area of other portions of the support. A cross-section means a cross-section perpendicular to the layering direction and a cross-sectional area means an area of a cross-section perpendicular to the layering direction. The manufacturing method of the metal member may further include a breaking step of breaking the support by causing a support removal device to vibrate the three-dimensional manufactured object.

According to this arrangement, the three-dimensional manufactured metal object is made by layering and bonding the plurality of layers in the layering direction. The three-dimensional manufactured object includes the metal member including the overhang portion and the plurality of supports that support the overhang portion. The support is a portion that is made of the same metal material as that of the metal member and is integral with the metal member. The support is in contact with the metal member only at the tip portion of the support in the layering direction. The cross-sectional area of the tip portion is smaller than the cross-sectional area of other portions of the support. In other words, the strength of the tip portion of the support is lower than the strength of other portions of the support.

When the three-dimensional manufactured object is vibrated, each of the supports vibrates together with the metal member, and stresses are generated in any portion of the support. The tip portion of the support has the lowest in strength of the support. When the stress generated in the tip portion of the support exceeds the strength of the tip portion of the support, the tip portion of the support breaks. That is, the tip portion, which is the most fragile portion of the support, breaks first, and the support is separated from the metal member. Thus, it is possible to separate each of the supports from the metal member merely by vibrating the entire three-dimensional manufactured object. Accordingly, the burden required to remove the support can be reduced.

In the present preferred embodiment, at least one of the following features may be added to the above manufacturing method of the metal member.

At least a portion of the support includes a cross-section having a thickness and a width larger than the thickness.

According to this arrangement, the thickness of the cross-section of the support is smaller than the width of the cross-section of the support. That is, the support is thin in a thickness direction and is likely to bend in the thickness direction of the support. When the three-dimensional manufactured object is vibrated, the support alternately repeats deformation and restoration in the thickness direction. Thus, it is possible to apply repeated loads, magnitudes and directions of which change regularly, to the support and to reliably break the tip portion of the support.

The width of the cross-section of the support and the thickness of the cross-section of the support are dimensions in directions that are perpendicular to each other. The cross-section of the support may have any of an elliptical shape, a rhombus shape, and a rectangular shape. Even when the cross-section of the support has any of these shapes, the width of the cross-section of the support is larger than the thickness of the cross-section of the support.

The plurality of supports includes a plurality of first supports each having a first natural frequency and a plurality of second supports each having a second natural frequency different from the first natural frequency.

According to this arrangement, when the three-dimensional manufactured object is vibrated at the first frequency, the frequency of the first support approaches the first natural frequency and the first support resonates. Thus, a large stress occurs in the tip portion of the first support, and the tip portion of the first support breaks. On the other hand, when the three-dimensional manufactured object is vibrated at the second frequency different from the first frequency, the frequency of the second support approaches the second natural frequency and the second support resonates. Thus, the large stress occurs in the tip portion of the second support, and the tip portion of the second support breaks. Accordingly, it is possible to separate all or almost all of the first supports and the second supports from the metal member merely by vibrating the three-dimensional manufactured object at the two frequencies.

In a case in which the plurality of supports includes the plurality of first supports and the plurality of second supports, the breaking step may include a first breaking step of breaking the first supports by causing a first support removal device to vibrate the three-dimensional manufactured object at a first frequency at which the first supports vibrate at the first natural frequency and a second breaking step of breaking the second supports by causing a second support removal device to vibrate the three-dimensional manufactured object at a second frequency at which the second supports vibrate at the second natural frequency before or after the first breaking step. The second support removal device may be the same device as the first support removal device, or another device.

Natural frequencies of the plurality of supports are equal to each other.

According to this arrangement, when the three-dimensional manufactured object is vibrated at a certain frequency, the frequency of the support approaches the natural frequency and the support resonates. Thus, a large stress occurs in the tip portion of the support, and the tip portion of the support breaks. Accordingly, it is possible to separate all or almost all of the supports from the metal member merely by vibrating the three-dimensional manufactured object at the single frequency.

The metal member includes a hollow portion provided with a hole that is open at an outer surface of the metal member and a cavity that extends from the hole to an interior of the metal member, and the support is disposed in the hollow portion.

According to this arrangement, the support is disposed in the hollow portion of the metal member and thus it is difficult to bring a tool to separate the support into contact with the support. However, it is possible to separate each of the supports merely by vibrating the three-dimensional manufactured object even without using such a tool. The separated support can be discharged from the cavity through the hole of the hollow portion that is open at the outer surface of the metal member. Thus, it is possible to remove the support from the metal member.

The support further includes a notch that is open at an outer surface of the support, and a dimension in the layering direction from a tip portion of the support in the layering direction to the notch is smaller than a maximum value of a diameter of the hole.

According to this arrangement, the notch, which is open at the outer surface of the support, is provided with the support. When the support, which has been separated from the metal member, collides with the metal member, the stress concentration occurs at the notch. When this stress exceeds the strength of the support, the support breaks at the notch. The dimension in the layering direction from the tip portion of the support to the notch is smaller than the maximum value of the diameter of the hole. Thus, the support, which has been separated from the metal member, can be cut into fragments each of which is shorter than the diameter of the hole. Thus, it is possible to effectively discharge the separated support through the hole of the hollow portion.

The support further includes a notch that is open at an outer surface of the support.

According to this arrangement, the notch, which is open at the outer surface of the support, is provided with the support. When the support, which has been separated from the metal member, collides with the metal member, the stress concentration occurs at the notch. When this stress exceeds the strength of the support, the support breaks at the notch. Thus, the support, which has been separated from the metal member, can be cut into shorter fragments.

### Advantageous Effects of Invention

According to the present invention, it is possible to provide a manufacturing method of a metal member that is able to reduce the burden required to remove supports.

### BRIEF DESCRIPTION OF THE DRAWINGS

[Fig. 1] a block diagram showing a schematic manufacturing system of a metal member according to a preferred embodiment of the present invention.
[Fig. 2] a schematic view showing a three-dimensional manufactured metal object manufactured by the manufacturing system shown in Fig. 1. Fig. 2 (a) is an external view of the three-dimensional manufactured object when viewed in the direction of the arrow IIA shown in Fig. 2 (b). Fig. 2 (b) is a cross-sectional view of the three-dimensional manufactured object taken along the IIB-IIB line shown in Fig. 2 (a). Fig. 2 (c) is an external view of the three-dimensional manufactured object when viewed in the direction of the arrow IIC shown in Fig. 2 (b).
[Fig. 3] a schematic view showing a support (a first support) provided in the three-dimensional manufactured object shown in Fig. 2. Fig. 3 (a) is a side view of the support when viewed in the direction of the arrow IIIA shown in Fig. 3 (c). Fig. 3 (b) is a front view of the support when viewed in the direction of the arrow IIIB shown in Fig. 3 (c).
Fig. 3 (c) is a plan view of the support when viewed in the direction of the arrow IIIC shown in Fig. 3 (b).
[Fig. 4A] a cross-sectional view showing an example of the cross-section of the support taken along the IV-IV line shown in Fig. 3 (b).
[Fig. 4B] a cross-sectional view showing another example of the cross-section of the support taken along the IV-IV line shown in Fig. 3 (b).
[Fig. 5] a schematic view showing an example of a support removal device.
[Fig. 6A] a cross-sectional view showing a state in which the first supports have been separated from the metal member.
[Fig. 6B] a cross-sectional view showing a state in which the first supports have been broken at the notches and the second supports have been separated from the metal member.
[Fig. 6C] a cross-sectional view showing a state in which the second supports have been broken at the notches.
[Fig. 6D] a cross-sectional view showing a state in which the separated supports have been discharged from the metal member.

### DETAILED DESCRIPTION OF THE PREFERRED EMBODIMENTS

Hereinafter, preferred embodiments of the present invention will be described in detail referring to the attached drawings.

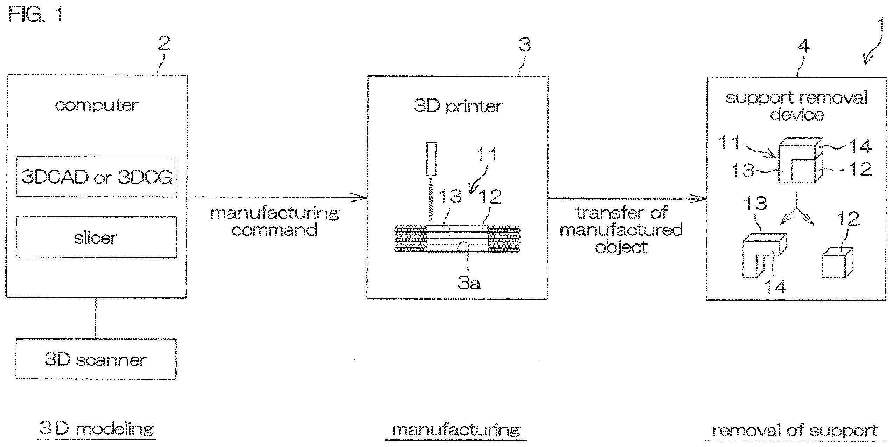

Fig. 1 is a block diagram showing a schematic manufacturing system 1 of a metal member 13 according to a preferred embodiment of the present invention. To facilitate understanding, Fig. 1 shows the metal member 13 and a support 12 that have shapes different from their actual shapes.

The manufacturing system 1 of the metal member 13 includes a personal computer 2 to create 3D data (a so-called 3D model) for a three-dimensional manufactured object 11, a 3D printer 3 that manufactures the three-dimensional manufactured metal object 11 based on the 3D data of the three-dimensional manufactured object 11 created by the computer 2, and a support removal device 4 that removes the support 12 from the three-dimensional manufactured metal object 11 manufactured by the 3D printer 3.

When the metal member 13 is manufactured, 3D modeling to create 3D data of the three-dimensional manufactured object 11 using the computer 2 is performed. After that, 3D printing to cause the 3D printer 3 to manufacture the three-dimensional manufactured metal object 11 based on the 3D data of the three-dimensional manufactured object 11 is performed. After that, the three-dimensional manufactured object 11 is manually or automatically carried to the support removal device 4 and the support removal device 4 removes the support 12. Thus, the metal member 13 is manufactured.

Software (a so-called , slicer) is installed on the computer 2. The software performs slicing to divide 3D data of the three-dimensional manufactured object 11 into a plurality of layers parallel to a layering direction DL (vertical direction), and creating instruction date (a so-called , G codes) that define a modeling order for each layer created by the slicing. The functions of the slicer may be included in the 3D CAD software or 3D CG software installed on the computer 2.

The 3D printer 3 layers and bonds in the layering direction DL all of the layers included in the three-dimensional manufactured object 11, in order, from a side of the manufacturing stage 3a in accordance with the G codes. The 3D printer 3 manufactures each layer included in the three-dimensional manufactured object 11 by selective laser sintering to sinter only the specific portion of the metal powder layer by laser irradiation. The selective laser sintering is a type of additive manufacturing. As long as the 3D printer 3 uses the additive manufacturing, the 3D printer 3 may manufacture the three-dimensional manufactured metal object 11 using a method other than the selective laser sintering.

The three-dimensional manufactured object 11 is made of metal material such as iron. The three-dimensional manufactured object 11 includes the metal member 13 including an overhang portion 14, and the support 12 that supports the overhang portion 14. The 3D data of the metal member 13 may be created by the 3D CAD software or 3D CG software installed on the computer 2, or may be created by a 3D scanner. The 3D data of the support 12 is automatically added to the 3D data of the metal member 13. The addition may be performed by slicing software, or may be performed by the 3D CAD software or 3D CG software.

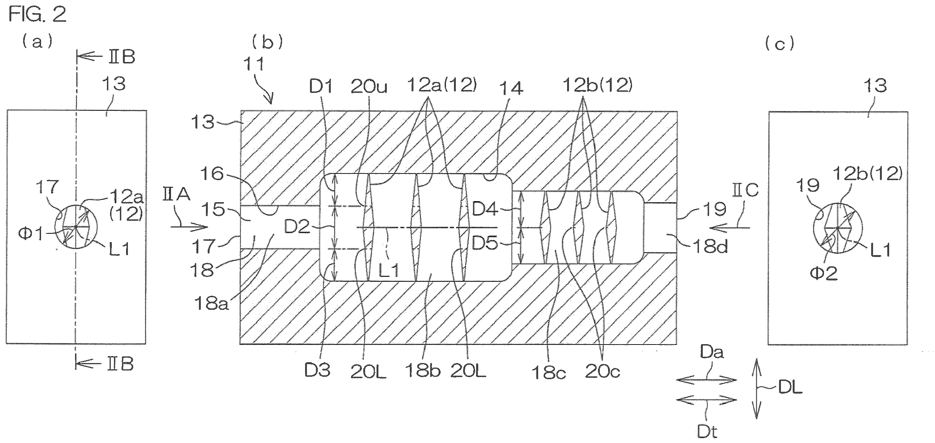

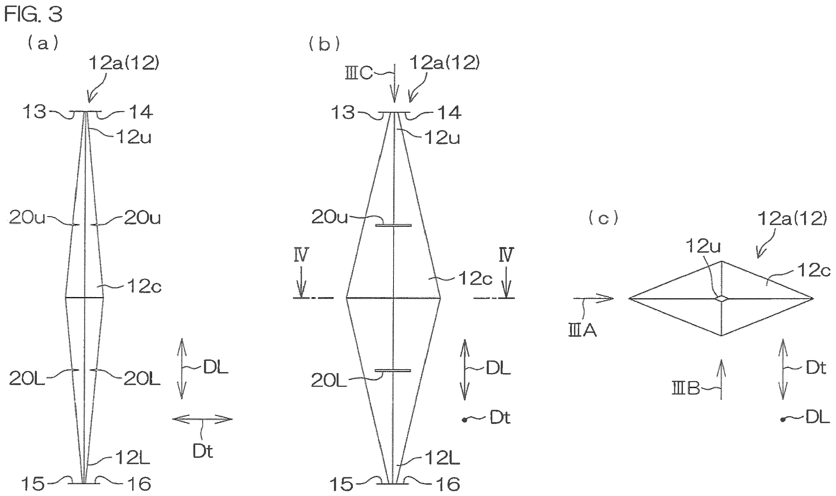

Fig. 2 is a schematic view showing the three-dimensional manufactured metal object 11 manufactured by the manufacturing system 1 shown in Fig. 1. Fig. 3 is a schematic view showing the support 12 (the first support 12a) provided in the three-dimensional manufactured object 11 shown in Fig. 2.

Fig. 2 (a) is an external view of the three-dimensional manufactured object 11 when viewed in the direction of the arrow IIA shown in Fig. 2 (b). Fig. 2 (b) is a cross-sectional view of the three-dimensional manufactured object 11 taken along the IIB-IIB line shown in Fig. 2 (a). Fig. 2 (c) is an external view of the three-dimensional manufactured object 11 when viewed in the direction of the arrow IIC shown in Fig. 2 (b). Fig. 3 (a) is a side view of the support 12 when viewed in the direction of the arrow IIIA shown in Fig. 3 (c). Fig. 3 (b) is a front view of the support 12 when viewed in the direction of the arrow IIIB shown in Fig. 3 (c). Fig. 3 (c) is a plan view of the support 12 when viewed in the direction of the arrow IIIC shown in Fig. 3 (b).

As shown in Fig. 2 (b), the metal member 13 includes a hollow portion 15 defining a cavity 18. The cavity 18 may connect two holes that are open at the outer surface of the metal member 13, or may extend to the interior of the metal member 13 from a hole that is open at the outer surface of the metal member 13 and be closed at the interior of the metal member 13. Fig. 2 (b) shows an example of the former. In a case in which the metal member 13 is a cylinder head included in engine components, for example, the hollow portion 15 corresponds to a water jacket that guides cooling water to cool an engine.

The hollow portion 15 includes a first hole 17 that is open at the outer surface of the metal member 13, a second hole 19 that is open at the outer surface of the metal member 13, and the cavity 18 that extends from the first hole 17 to the second hole 19. The first hole 17 may have a round shape or an elliptical shape, or may have a shape other than these shapes. This applies to the second hole 19. The area of the first hole 17 is smaller than the area of the second hole 19. The area of the first hole 17 may be equal to the area of the second hole 19, or may be larger than the area of the second hole 19.

The cavity 18 of the hollow portion 15 is defined by a tubular inner circumferential surface 16 surrounding the centerline L1 of the cavity 18. The inner circumferential surface 16 of the hollow portion 15 is continuous over its whole circumference in a circumferential direction of the hollow portion 15 (a direction around the centerline L1). The cavity 18 includes a first passage 18a that extends from the first hole 17 toward the second hole 19, a second passage 18b that extends from the first passage 18a toward the second hole 19, a third passage 18c that extends from the second passage 18b toward the second hole 19, and a fourth passage 18d that extends from the third passage 18c to the second hole 19. The diameter of the second passage 18b is larger than the diameter of the third passage 18c.

The plurality of supports 12 are disposed inside the hollow portion 15, that is, disposed in the cavity 18. In Fig. 2 (b), the number of the supports 12 is reduced to facilitate understanding, but actually more supports 12 are disposed inside the hollow portion 15. Although Fig. 2 (b) shows that the supports 12 are disposed only in the second passage 18b and the third passage 18c, the supports 12 also may be disposed in at least one of the first passage 18a and the fourth passage 18d.

Each support 12 is integral with the metal member 13 and made of the same metal martial as that of the metal member 13. Each support 12 is in contact with the metal member 13 only at two tip portions, that is, the upper end portion 12u and the lower end portion 12L of the support 12 in the layering direction DL. Each support 12 extends in the layering direction DL from the lower portion of the inner circumferential surface 16 of the hollow portion 15 to the upper portion of the inner circumferential surface 16 of the hollow portion 15. The overhang portion 14 is provided in a ceiling portion of the hollow portion 15, that is, the upper portion of the inner circumferential surface 16 of the hollow portion 15. Thus, the overhang portion 14 is supported by the plurality of supports 12.

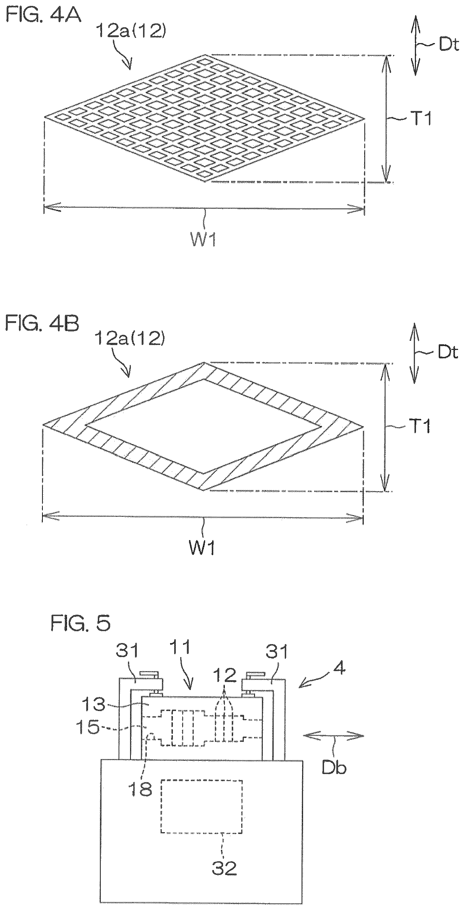

The support 12 may be solid or may be hollow. More specifically, the entire support 12 may be solid or hollow, or a solid portion and a hollow portion may be provided with the support 12. In a case in which the entire support 12 is hollow or a hollow portion is provided with the support 12, the support 12 may include a mesh-shaped cross-section, or may include an annular cross-section that surrounds the internal space. Fig. 4A shows an example of the former and Fig. 4B shows an example of the latter.

As shown in Fig. 3(a), Fig. 3(b) and Fig. 3(c), the upper end portion 12u of the support 12 is thinner than the central portion 12c of the support 12 in the layering direction DL. That is, the length of the outer circumference of the upper end portion 12u of the support 12 is shorter than the length of the outer circumference of the central portion 12c of the support 12. Similarly, the lower end portion 12L of the support 12 is thinner than the central portion 12c of the support 12 in the layering direction DL.

The thickness of the support 12, that is, the length of the outer circumference of the support 12 increases as the central portion 12c of the support 12 is approached. The upper end portion 12u of the support 12 may be thicker or thinner than the lower end portion 12L of the support 12, or may be equal to the lower end portion 12L of the support 12 in thickness. The maximum value of the outer diameter of the support 12 (a width W1 shown in Fig. 4A and Fig. 4B) is smaller than a maximum value Φ 1 (refer to Fig. 2(a)) of the diameter of the first hole 17 and smaller than a maximum value Φ 2 (refer to Fig. 2(c)) of the diameter of the second hole 19.

The cross-sectional area of the support 12 (the area of the cross-section perpendicular to the layering direction DL) increases continuously or step by step as the central portion 12c of the support 12 in the layering direction DL is approached. Fig. 3(a) and Fig. 3(b) show an example in which the cross-sectional area of the support 12 increases continuously. The cross-sectional area of the tip portion of the support 12 (the upper end portion 12u or the lower end portion 12L of the support 12) is smaller than the cross-sectional area of other portions of the same support 12. In this case, the cross-sectional area of the upper end portion 12u of the support 12 may be larger or smaller than the cross-sectional area of the lower end portion 12L of the same support 12, or may be equal to the cross-sectional area of the lower end portion 12L of the same support 12.

Fig. 4A and Fig. 4B show an example in which the support 12 includes a rhombus shaped cross-section. The support 12 may include a cross-section having such a shape at any position in the layering direction DL, or may include a cross-section having such a shape only at the specific position. The cross-section of the support 12 may include an elliptical shaped or rectangular shaped cross-section, or may include a cross-section other than these shapes. Even when the cross-section of the support 12 has any of these shapes, the width W1 of the cross-section of the support 12 is larger than a thickness T1 of the cross-section of the support 12. All of the supports 12 are disposed such that the thickness direction Dt of the support 12 is parallel or substantially parallel to an axial direction Da of the cavity 18 (a direction of the centerline L1 of the cavity 18).

The plurality of supports 12 include a plurality of first supports 12a that are disposed in the second passage 18b and a plurality of second supports 12b that are disposed in the third passage 18c. The first support 12a is longer in the layering direction DL than the second support 12b. The length of the second support 12b in the layering direction DL is larger than the maximum value Φ1 of the diameter of the first hole 17 and larger than the maximum value Φ2 of the diameter of the second hole 19. Thus, the length of the first support 12a in the layering direction DL is larger than the maximum value Φ1 of the diameter of the first hole 17 and larger than the maximum value Φ2 of the diameter of the second hole 19.

The first support 12a has a first natural frequency. The second support 12b has a second natural frequency. That is, each element (shape, cross-sectional area, size etc.) that determines the natural frequency of the first support 12a is set so that the natural frequency of the first support 12a is the first natural frequency. Similarly, each element that determines the natural frequency of the second support 12b is set so that the natural frequency of the second support 12b is the second natural frequency. The first natural frequency is lower than the second natural frequency.

Each support 12 includes a plurality of notches that are open at the outer surface of the support 12. As shown in Fig. 3 (a), the first support 12a includes an upper notch 20u and a lower notch 20L that are disposed at positions different from each other in the layering direction DL. As shown in Fig. 2 (b), the second support 12b includes a central notch 20c that is disposed between the upper end portion 12u of the second support 12b and the lower end portion 12L of the second support 12b in the layering direction DL. The central portion 12c of the first support 12a in the layering direction DL is disposed between the upper notch 20u and the lower notch 20L in the layering direction DL.

A dimension D1 in the layering direction DL from the upper end portion 12u of the first support 12a to the upper notch 20u is smaller than the maximum value Φ1 of the diameter of the first hole 17 and smaller than the maximum value Φ2 of the diameter of the second hole 19. Similarly, a dimension D3 in the layering direction DL from the lower end portion 12L of the first support 12a to the lower notch 20L is smaller than the maximum value Φ1 of the diameter of the first hole 17 and smaller than the maximum value Φ2 of the diameter of the second hole 19. Furthermore, a dimension D2 in the layering direction DL from the upper notch 20u to the lower notch 20L is smaller than the maximum value Φ1 of the diameter of the first hole 17 and smaller than the maximum value Φ2 of the diameter of the second hole 19.

A dimension D4 in the layering direction DL from the upper end portion 12u of the second support 12b to the central notch 20c is smaller than the maximum value Φ1 of the diameter of the first hole 17 and smaller than the maximum value Φ2 of the diameter of the second hole 19. Similarly, a dimension D5 in the layering direction DL from the lower end portion 12L of the second support 12b to the central notch 20c is smaller than the maximum value Φ1 of the diameter of the first hole 17 and smaller than the maximum value Φ2 of the diameter of the second hole 19.

Next, the removal of the supports 12 will be described.

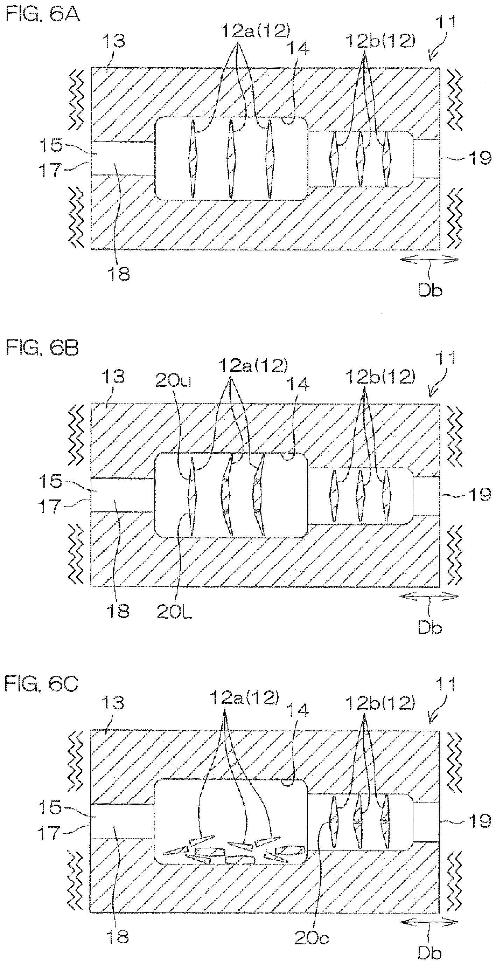

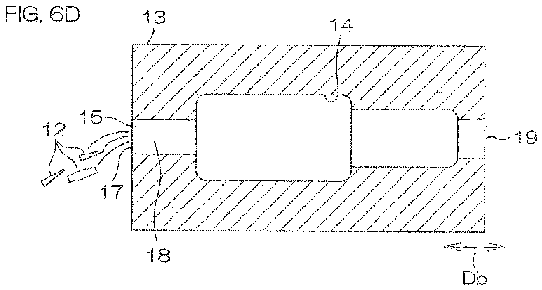

Fig. 5 is a schematic view showing an example of the support removal device 4. Fig. 6A is a cross-sectional view showing a state in which the first supports 12a have been separated from the metal member 13. Fig. 6B is a cross-sectional view showing a state in which the first supports 12a have been broken at the notches and the second supports 12b have been separated from the metal member 13. Fig. 6C is a cross-sectional view showing a state in which the second supports 12b have been broken at the notches. Fig. 6D is a cross-sectional view showing a state in which the separated supports 12 have been discharged from the metal member 13.

As shown in Fig. 5, the support removal device 4, which removes the supports 12 from the three-dimensional manufactured object 11, includes a holder 31 that holds the three-dimensional manufactured object 11, and a vibrating motor 32 that vibrates the three-dimensional manufactured object 11 held by the holder 31. When all the supports 12 are removed from the three-dimensional manufactured metal object 11 manufactured by the 3D printer 3 (refer to Fig. 1), the three-dimensional manufactured object 11 is attached to the holder 31. In this state, the vibrating motor 32 vibrates the three-dimensional manufactured object 11 in a fixed vibration direction Db.

Specifically, the vibrating motor 32 vibrates the three-dimensional manufactured object 11 at the first frequency and thereafter vibrates the three-dimensional manufactured object 11 at the second frequency. The first frequency is a frequency in which the first support 12a vibrates at the natural frequency of the first support 12a, that is, the first natural frequency. The second frequency is a frequency in which the second support 12b vibrates at the natural frequency of the second support 12b, that is, the second natural frequency. The first frequency is lower than the second frequency.

When the three-dimensional manufactured object 11 is vibrated, the first supports 12a bend and the central portion 12c of the first support 12a moves in the vibration direction Db with respect to the upper end portion 12u and the lower end portion 12L of the first support 12a. Thus, stresses are generated in the upper end portion 12u and the lower end portion 12L of the first support 12a. Similarly, when the three-dimensional manufactured object 11 is vibrated, the central portion 12c of the second support 12b moves in the vibration direction Db with respect to the upper end portion 12u and the lower end portion 12L of the second support 12b and stresses are generated in the upper end portion 12u and the lower end portion 12L of the second support 12b.

The thickness T1 of the cross-section of the first support 12a is smaller than the width W1 of the cross-section of the first support 12a and thus the first support 12a is likely to bend in a thickness direction Dt of the first support 12a. Similarly, the thickness T1 of the cross-section of the second support 12b is smaller than the width W1 of the cross-section of the second support 12b and thus the second support 12b is likely to bend in a thickness direction Dt of the second support 12b. The thickness direction Dt of each support 12 is equal or substantially equal to the vibration direction Db of the three-dimensional manufactured object 11. Thus, it is possible to stably deform the first support 12a and the second support 12b in the vibration direction Db.

When the frequency of the first support 12a approaches the first natural frequency, the first support 12a resonates and stresses generated in the upper end portion 12u and the lower end portion 12L of the first support 12a increase. The strength of the upper end portion 12u and the lower end portion 12L of the first support 12a is lower than the strength of other portions of the first support 12a. As shown in Fig. 6A, when the stresses exceed the strength of the upper end portion 12u of the first support 12a, the upper end portion 12u of the first support 12a breaks. Similarly, when the stresses exceed the strength of the lower end portion 12L of the first support 12a, the lower end portion 12L of the first support 12a breaks.

The natural frequency of the second support 12b (the second natural frequency) is higher than the natural frequency of the first support 12a (the first natural frequency). When the support removal device 4 vibrates the three-dimensional manufactured object 11 at the first frequency, although both of the first support 12a and the second support 12b vibrate, the second support 12b does not resonate since the natural frequencies of the first support 12a and the second support 12b are different from each other. Thus, as shown in Fig. 6A, the second support 12b is still combined with the metal member 13 even after the first support 12a has been separated from the metal member 13.

When the support removal device 4 changes the frequency of the three-dimensional manufactured object 11 to the second frequency, the second support 12b resonates and stresses generated in the upper end portion 12u and the lower end portion 12L of the second support 12b increase. The strength of the upper end portion 12u and the lower end portion 12L of the second support 12b is lower than the strength of other portions of the second support 12b. As shown in Fig. 6B, when the stresses exceed the strength of the upper end portion 12u of the second support 12b, the upper end portion 12u of the second support 12b breaks. Similarly, when the stresses exceed the strength of the lower end portion 12L of the second support 12b, the lower end portion 12L of the second support 12b breaks.

As shown in Fig. 6B, each support 12 includes a plurality of notches 20u, 20c, 20L that are open at the outer surface of the support 12. When the three-dimensional manufactured object 11 is vibrated, each support 12 deforms and stresses are generated at the notches 20u, 20c, 20L. Since the support 12 repeatedly collides with the metal member 13 due to the vibration of the three-dimensional manufactured object 11 after the support 12 has been separated from the metal member 13, the stresses are generated at the notches 20u, 20c, 20L even after the support 12 has been separated. As shown in Fig. 6B and Fig. 6C, the support 12 breaks at the notches 20u, 20c, 20L after the support 12 has been separated from the metal member 13. Thus, the support 12, which has been separated from the metal member 13, can be cut into fragments each of which is shorter than the diameters of the first hole 17 and the second hole 19.

After the three-dimensional manufactured object 11 is vibrated at the first frequency and the second frequency and all the supports 12 are separated from the metal member 13, as shown in Fig. 6D, the separated supports 12 are discharged from the cavity 18 of the hollow portion 15 through at least one of the first hole 17 and the second hole 19. The support 12 may be discharged by supplying the cavity 18 with fluid such as air or water, or may be discharged by inclining and shaking the metal member 13. If necessary, machining such as drilling and polishing may be applied to the metal member 13 after the separated supports 12 have been discharged.

As described above, in the present preferred embodiment, the three-dimensional manufactured metal object 11 is made by layering and bonding the plurality of layers in the layering direction DL. The three-dimensional manufactured object 11 includes the metal member 13 including the overhang portion 14 and the plurality of supports 12 that support the overhang portion 14. The support 12 is a portion that is made of the same metal material as that of the metal member 13 and is integral with the metal member 13. The support 12 is in contact with the metal member 13 only at the tip portion of the support 12 in the layering direction DL (the upper end portion 12u or the lower end portion 12L of the support 12). The cross-sectional area of the tip portion is smaller than the cross-sectional area of other portion of the support 12. In other words, the strength of the tip portion of the support 12 is lower than the strength of other portions of the support 12.

When the three-dimensional manufactured object 11 is vibrated, each of the supports 12 vibrates together with the metal member 13, and stresses are generated in any portion of the support 12. The tip portion of the support 12 has the lowest strength of the support 12. When the stress generated in the tip portion of the support 12 exceeds the strength of the tip portion of the support 12, the tip portion of the support 12 breaks. That is, the tip portion, which is the most fragile portion of the support 12, breaks first, and the support 12 is separated from the metal member 13. Thus, it is possible to separate each of the supports 12 from the metal member 13 merely by vibrating the entire three-dimensional manufactured object 11. Accordingly, the burden required to remove the support 12 can be reduced.

In the present preferred embodiment, the thickness T1 of the cross-section of the support 12 is smaller than the width W1 of the cross-section of the support 12. That is, the support 12 is thin in the thickness direction Dt and is likely to bend in the thickness direction Dt of the support 12. When the three-dimensional manufactured object 11 is vibrated, the support 12 alternately repeats deformation and restoration in the thickness direction Dt. Thus, it is possible to apply repeated loads, magnitudes and directions of which change regularly, to the support 12 and to reliably break the tip portion of the support 12.

In the present preferred embodiment, when the three-dimensional manufactured object 11 is vibrated at the first frequency, the frequency of the first support 12a approaches the first natural frequency and the first support 12a resonates. Thus, the large stress occurs in the tip portion of the first support 12a, and the tip portion of the first support 12a breaks. On the other hand, when the three-dimensional manufactured object 11 is vibrated at the second frequency different from the first frequency, the frequency of the second support 12b approaches the second natural frequency and the second support 12b resonates. Thus, the large stress occurs in the tip portion of the second support 12b, and the tip portion of the second support 12b breaks. Accordingly, it is possible to separate all or almost all of the first supports 12a and the second supports 12b from the metal member 13 merely by vibrating the three-dimensional manufactured object 11 at the two frequencies.

In the present preferred embodiment, the support 12 is disposed in the hollow portion 15 of the metal member 13, so it is difficult to bring a tool to separate the support 12 into contact with the support 12. However, it is possible to separate each of the supports 12 merely by vibrating the three-dimensional manufactured object 11 even without using such a tool. The separated support 12 can be discharged from the cavity 18 through the hole of the hollow portion 15 that is open at the outer surface of the metal member 13. Thus, it is possible to remove the support 12 from the metal member 13.

In the present preferred embodiment, the notches 20u, 20c, 20L, which are open at the outer surface of the support 12, are provided with the support 12. When the support 12, which has been separated from the metal member 13, collides with the metal member 13, the stress concentration occurs at the notches 20u, 20c, 20L. When this stress exceeds the strength of the support 12, the support 12 breaks at the notches 20u, 20c, 20L. The dimensions D1, D2, D4 and D5 in the layering direction DL from the tip portion (the upper end portion or the lower end portion) of the support 12 to the notches 20u, 20c, 20L are smaller than the maximum value Φ1 of the diameter of the first hole 17 and smaller than the maximum value Φ2 of the diameter of the second hole 19. Thus, the support 12, which has been separated from the metal member 13, can be cut into fragments each of which is shorter than the diameters of the first hole 17 and the second hole 19. Thus, it is possible to effectively discharge the separated support 12 through the hole of the hollow portion 15.

### Other Preferred Embodiments

The present invention is not restricted to the contents of the preferred embodiments described above and various modifications are possible.

For example, the metal member 13 may be an engine component other than the cylinder head, or may be a component other than an engine component.

The support 12 may be disposed outside the hollow portion 15. For example, the support 12 may extend from the manufacturing stage 3a (refer to Fig. 1) to the overhang portion 14. That is, the lower end portion 12L of the support 12 may be in contact with the manufacturing stage 3a instead of the metal member 13.

The notches 20u, 20c, 20L may be omitted from the support 12.

It is possible that one of the width and the thickness of the support 12 is constant and the other of the width and the thickness of the support 12 decreases as the tip portion of the support 12 is approached.

The natural frequencies of all the supports 12 may be equal to each other, or may be different from each other. In the former case, it is possible to cause all or almost all of the supports 12 to resonate and separate from the metal member 13 merely by vibrating the three-dimensional manufactured object 11 at the single frequency.

As long as the upper end portion 12u and the lower end portion 12L of the support 12 break, the frequency of the three-dimensional manufactured object 11 may not be a frequency in which the support 12 resonates.

Two or more arrangements among all the arrangements described above may be combined.

Various other design changes are possible within the scope of the matters described in the claims.

### REFERENCE SIGNS LIST

- 1:: manufacturing system
- 2:: computer
- 3:: 3D printer
- 3a:: manufacturing stage
- 4:: support remove device
- 11:: three-dimensional manufactured object
- 12:: support
- 12a:: first support
- 12b:: second support
- 12u:: upper end portion of support
- 12c:: central portion of the support
- 12L:: lower end portion of support
- 13:: metal member
- 14:: overhang portion
- 15:: hollow portion
- 16:: inner circumferential surface of hollow portion
- 17:: first hole
- 18:: cavity
- 18a:: first passage
- 18b:: second passage
- 18c:: third passage
- 18d:: fourth passage
- 19:: second hole
- 20u:: upper notch
- 20c:: central notch
- 20L:: lower notch
- 31:: holder
- 32:: vibrating motor
- D1-D5:: dimension
- Da:: axial direction of cavity
- Db:: vibration direction
- DL:: layering direction
- Dt:: thickness direction
- L1:: centerline of cavity
- T1:: thickness of cross-section of support
- W1:: width of cross-section of support
- Φ1:: maximum value of diameter of first hole
- Φ2:: maximum value of diameter of second hole

## Claims

1. A manufacturing method of a metal member, comprising a manufacturing step of manufacturing a three-dimensional manufactured metal object through additive manufacturing by layering and bonding a plurality of layers in a layering direction, wherein
the three-dimensional manufactured object includes
the metal member including an overhang portion, and
a plurality of supports that support the overhang portion and are integral with the metal member,
the support is in contact with the metal member only at a tip portion of the support in the layering direction, and
a cross-sectional area of the tip portion of the support is smaller than a cross-sectional area of other portions of the support.

2. The manufacturing method of the metal member according to claim 1, further comprising a breaking step of breaking the supports by causing a support removal device to vibrate the three-dimensional manufactured object.

3. The manufacturing method of the metal member according to claim 1 or 2, wherein at least a portion of the support includes a cross-section having a thickness and a width larger than the thickness.

4. The manufacturing method of the metal member according to any one of claims 1 to 3, wherein the plurality of supports include a plurality of first supports each having a first natural frequency and a plurality of second supports each having a second natural frequency different from the first natural frequency.

5. The manufacturing method of the metal member according to any one of claims 1 to 3, wherein natural frequencies of the plurality of supports are equal to each other.

6. The manufacturing method of the metal member according to any one of claims 1 to 5, wherein
the metal member includes a hollow portion provided with a hole that is open at an outer surface of the metal member and a cavity that extends from the hole to an interior of the metal member, and
the support is disposed in the hollow portion.

7. The manufacturing method of the metal member according to claim 6, wherein
the support further includes a notch that is open at an outer surface of the support and
a dimension in the layering direction from the tip portion of the support in the layering direction to the notch is smaller than a maximum value of a diameter of the hole.

8. The manufacturing method of the metal member according to any one of claims 1 to 5, wherein the support further includes a notch that is open at an outer surface of the support.
